# EUROPÄISCHE PATENTSCHRIFT

(11) **EP 2 103 515 B1**
(45) Veröffentlichungstag und Bekanntmachung des Hinweises auf die Patenterteilung: **27.03.2013**
(21) Anmeldenummer: 09001131.3
(22) Anmeldetag: 28.01.2009
(51) Int. Cl.: B63G 8/36

(54) **Unterseeboot**
Submarine
Submersible

(30) Priorität: 20.03.2008 DE 102008015150
(43) Veröffentlichungstag der Anmeldung: 23.09.2009
(73) Patentinhaber: ThyssenKrupp Marine Systems GmbH, 24143 Kiel (DE)
(72) Erfinder: Büchner, Richard, 23611 Bad Schwartau (DE); Dühring, Thomas, 23569 Lübeck (DE); Duysen, Maike, 24103 Kiel (DE); Ziel, Sönke, 24568 Kaltenkirchen (DE)
(74) Vertreter: Vollmann, Heiko

(56) Entgegenhaltungen:
- DE-B3-102006 048 716
- DE-C1- 19 524 248
- DE-C1- 19 830 470
- FR-A1- 2 235 732
- FR-A1- 2 342 746
- GB-A- 575 066
- GB-A- 1 263 231
- GB-A- 2 119 353

## Beschreibung

Die Erfindung betrifft ein Unterseeboot mit den im Oberbegriff des Anspruchs 1 angegebenen Merkmalen. Ein solches Unterseeboot geht aus dem Dokument DE-B-10 2006 048716 als bekannt hervor.

Auf Unterseebooten ist es bei Tauchfahrten unterhalb der Schnorchelfahrtiefe erforderlich, den insbesondere durch die Ausatemluft der Besatzung erhöhten CO₂-Anteil der Raumluft im Inneren des Unterseebootes auf oder unterhalb eines zulässigen Grenzwerts zu halten. Hierzu werden an Bord von Unterseebooten in der Regel CO₂-Absorptionseinrichtungen eingesetzt.

In diesem Zusammenhang sind CO₂-Absorptionseinrichtungen bekannt, bei denen CO₂ von einem Hydroxid gebunden wird und dabei in ein Carbonat umgewandelt wird. Das Hydroxid befindet sich in Absorptionsbehältern, die von der Innenraumluft bzw. Belüftungsluft des Unterseeboots durchströmt werden. Das Absorptionsvermögen des Hydroxids ist begrenzt. Daher muss das Hydroxid dann, wenn es sich vollständig in ein Carbonat umgewandelt hat, ausgetauscht werden. Zu diesem Zweck ist das Hydroxid in Patronen bzw. Kartuschen gefüllt, die in den Absorptionsbehältern der CO₂-Absorptionseinrichtung in regelmäßigen Abständen ausgewechselt werden. Hierbei erweist es sich als nachteilig, dass die Intervalle, nach denen die Kartuschen ausgewechselt werden müssen, vergleichsweise kurz sind, so dass diese CO₂-Absorptionseinrichtungen einen verhältnismäßig großen Bedienaufwand erfordern, der den übrigen Bootsbetrieb ggf. stören kann.

Vor diesem Hintergrund liegt der Erfindung die Aufgabe zugrunde, ein Unterseeboot mit einer CO₂-Absorptionseinrichtung zu schaffen, die während einer Mission des Unterseeboots auf See das in der Belüftungsluft des Unterseeboots befindliche CO₂ zuverlässig absorbiert, wobei im Wesentlichen kein Aufwand zur Bedienung der CO₂-Absorptionseinrichtung seitens der Besatzung erforderlich ist.

Diese Aufgabe wird durch ein Unterseeboot mit den in Anspruch 1 angegebenen Merkmalen gelöst, wobei sich vorteilhafte Weiterbildungen dieses Unterseeboots aus den Unteransprüchen, der nachfolgenden Beschreibung sowie der Zeichnung ergeben.

Das Unterseeboot gemäß der Erfindung weist eine Belüftungseinrichtung zum Belüften des Inneren des Unterseebootes und eine CO₂-Absorptionseinrichtung auf. Erfindungsgemäß weist die CO₂-Absorptionseinrichtung zumindest zwei mit einem Hydroxid gefüllte Absorptionsbehälter auf. Diese Absorptionsbehälter sind in zwei zueinander parallelen Leitungssträngen der Belüftungseinrichtung angeordnet und nacheinander in eine von der Belüftungsluft durchströmbare Stellung schaltbar.

Hierbei liegt der Erfindung die Idee zugrunde, die gesamte für eine Mission des Unterseeboots erforderliche Menge eines Hydroxids, bei dem es sich z. B. um Calciumhydroxid (Ca(OH)₂) oder um Lithiumhydroxid (LiOH) handeln kann, von Beginn bis Ende der Mission vollständig in der CO₂-Absorptionseinrichtung zu lagern, um auf diese Weise das bislang erforderlich mehrmalige Befüllen der CO₂-Absorptionseinrichtung während des Einsatzes des Unterseeboots zu vermeiden. In diesem Zusammenhang ist vorteilhafterweise nicht nur ein Absorptionsbehälter sondern zumindest zwei und bevorzugt eine Vielzahl von Absorptionsbehältern mit dem Hydroxid gefüllt, die in der zur Aufbereitung und Verteilung der Belüftungsluft in dem Unterseeboot vorgesehenen Belüftungseinrichtung in zueinander parallelen Leitungssträngen angeordnet sind. Von diesen Absorptionsbehältern wird jeweils nur einer von der Belüftungsluft durchströmt. In dem durchströmten Absorptionsbehälter wird das CO₂ von dem Hydroxid gebunden. Die Belüftungsluft wird solange durch den in Betrieb befindlichen Absorptionsbehälter geleitet, bis das Absorptionsvermögen des darin befindlichen Hydroxids erschöpft ist. Anschließend wird auf einen anderen Absorptionsbehälter umgeschaltet, der nun von der Belüftungsluft durchströmt wird. Die Verwendung von mehreren Absorptionsbehältern ermöglicht es hierbei vorteilhaft, diese so zu dimensionieren, dass die den Absorptionsbehälter durchströmende Luft mit dem Hydroxid über einen für die Absorption von CO₂ optimalen Zeitraum in Kontakt ist, wobei auch berücksichtigt werden kann, dass der von dem Hydroxid verursachte Strömungswiderstand in akzeptablen Grenzen gehalten wird.

Da bei der CO₂-Absorptionseinrichtung des erfindungsgemäßen Unterseeboots jeweils nur ein Absorptionsbehälter in Betrieb ist, ist zweckmäßigerweise sicherzustellen, dass das in den übrigen nicht in Betrieb befindlichen Absorptionsbehältern gelagerte Hydroxid nicht unkontrolliert CO₂ aus seiner Umgebungsluft binden kann. Darüber hinaus ist zu verhindern, dass ein Absorptionsbehälter, dessen Absorptionsvermögen erschöpft ist, weiter von der Belüftungsluft durchströmt wird. Daher sind die Absorptionsbehälter in vorteilhafter Weiterbildung eingangs- und ausgangsseitig mit Absperrmitteln gasdicht verschließbar. So können in den zueinander parallelen Leitungssträngen der Belüftungseinrichtung, in denen jeweils ein Absorptionsbehälter angeordnet ist, sowohl anström- als auch abströmseitig des Absorptionsbehälters Absperrventile angeordnet sein. Die Grundstellung dieser Absperrventile ist zweckmäßigerweise eine den Leitungsstrang bzw. Absorptionsbehälter verschließende Stellung. Nur bei dem jeweils in Betrieb befindlichen Absorptionsbehälter werden die diesem vor- und nachgeschalteten Absperrventile in eine geöffnete Stellung geschaltet, so dass die Belüftungsluft diesen Absorptionsbehälter unter Abgabe von CO₂ durchströmen kann.

Die Absperrmittel, die die Absorptionsbehälter gasdicht verschließen, sind bevorzugt ansteuerbar ausgebildet. In diesem Fall ist vorteilhaft eine Steuerungseinrichtung zur öffnenden bzw. verschließenden Ansteuerung der Absperrmittel vorgesehen. Diese Steuerungseinrichtung ist zweckmäßigerweise derart ausgebildet, dass sie dann, wenn die Absorptionsfähigkeit des Hydroxids in einem gerade betriebenen Absorptionsbehälter erschöpft ist, selbstständig zumindest das diesem Absorptionsbehälter vorgeschaltete Absperrmittel schließend schaltet und die dem nächsten in Betrieb zu nehmenden Absorptionsbehälter vor- und nachgeschalteten Absperrmittel öffnend schaltet.

Der Umschaltzeitpunkt von einem Absorptionsbehälter zu dem nächsten wird durch den Zeitpunkt bestimmt, an dem das Hydroxid des in Betrieb befindlichen Absorptionsbehälters kein CO₂ mehr aufnehmen kann. Wenn dies der Fall ist, weist die den Absorptionsbehälter durchströmende Belüftungsluft ausgangsseitig des Absorptionsbehälters typischerweise einen erhöhten CO₂-Gehalt auf. Um dies feststellen zu können, können vorteilhaft ausgangsseitig der Absorptionsbehälter Mittel zur Erfassung des CO₂-Gehalts der Belüftungsluft angeordnet sein, die mit der Steuerungseinrichtung signalverbunden sind. Die Steuerungseinrichtung kann so auf Grundlage des ermittelten CO₂-Gehalts von einem auf den nachfolgenden Absorptionsbehälter umschalten.

Eine weitere vorteilhafte Ausgestaltung der Erfindung sieht vor, dass die Absorptionsbehälter zur Aufnahme von Hydroxid in Form von Schüttgut ausgebildet sind. D. h., das Hydroxid liegt bevorzugt in loser Form vor und kann über hierfür an den Absorptionsbehältern vorgesehene Einfüllöffnungen vor Beginn einer Mission des Unterseeboots manuell oder z. B. mittels geeigneter Vakuumfördereinrichtungen in die Absorptionsbehälter gefüllt werden. Gegenüber dem bislang in Patronen oder Kartuschen in die Absorptionsbehälter eingebrachten Hydroxid hat das lose Schüttgut den Vorteil, dass das Hydroxid in den Absorptionsbehältern im Wesentlichen direkt von der Belüftungsluft umströmt werden kann.

Wenn das lose Hydroxid in den Absorptionsbehälter gefüllt worden ist, kann die Packungsdichte des Hydroxids in dem Absorptionsbehälter beispielsweise über eine Rütteleinrichtung gesteigert werden. Durch den Rüttelvorgang können Staubpartikel entstehen. Um zu verhindern, dass die Staubpartikel aus dem Absorptionsbehälter in die Belüftungseinrichtung oder mit der Belüftungsluft in das zu belüftende Innere des Unterseeboots gelangen, wird zweckmäßigerweise in den Absorptionsbehältern ein Aufnahmeraum für das Hydroxid ausgangsseitig von einem entnehmbaren Filter begrenzt. Von diesem Filter können ggf. vorhandene Staubpartikel aufgefangen werden. Um eine gute Durchströmbarkeit in dem Absorptionsbehälter sicherzustellen, können die Filter nach dem Befüllen aus den Absorptionsbehältern entnommen und gereinigt werden.

In einer weiteren bevorzugten Ausgestaltung sind in den Absorptionsbehältern eingangsseitig Mittel zur Befeuchtung der Belüftungsluft mit Wasser angeordnet. Mit diesen Mitteln zur Wasserbefeuchtung wird dem Umstand Rechnung getragen, dass insbesondere bei Verwendung von Calciumhydroxid als Absorptionsmittel die Umsetzung dieses Calciumhydroxids in Calciumcarbonat und damit einhergehend die Absorption von CO₂ unter Anwesenheit von Wasser abläuft. Insofern kann die Ausnutzung des Calciumhydroxids bei einer Belüftungsluft mit geringer relativer Luftfeuchtigkeit durch eine zusätzliche Wasserbefeuchtung gesteigert werden.

Bevorzugt ist vorgesehen, die Belüftungsluft nicht direkt zu befeuchten. Stattdessen sieht eine vorteilhafte Weiterbildung der Erfindung vor, eingangsseitig des Absorptionsbehälters eine Sprüheinrichtung anzuordnen, die auf das Hydroxid sprühgerichtet ist. Hierbei ist die Sprüheinrichtung, bei der sich beispielsweise um eine oder mehrere Düsen handeln kann, auf das Hydroxid, vorzugsweise Calciumhydroxid, gerichtet, welches durch Bindung von CO₂ bereits in Calciumcarbonat umgewandelt worden ist. Die Belüftungsluft kann das Wasser, mit dem das Calciumcarbonat befeuchtet ist, beim Umströmen des Calciumcarbonats aufnehmen.

Die Befeuchtung des Calciumcarbonats ist nicht grundsätzlich erforderlich, sondern hängt im Wesentlichen von der relativen Feuchtigkeit der Belüftungsluft, der CO₂ entzogen werden soll, sowie deren CO₂-Gehalt ab. Um den CO₂-Gehalt der Belüftungsluft aufnehmen zu können, sind vorteilhaft eingangsseitig der Absorptionsbehälter Mittel zur Erfassung des CO₂-Gehalts der Belüftungsluft angeordnet. Hierbei kann es sich z. B. um einen entsprechenden Gassensor handeln. Weiter vorteilhaft sind eingangsseitig der Absorptionsbehälter auch Mittel zur Erfassung der Wasserbeladung der Belüftungsluft, beispielsweise Feuchtesensoren, angeordnet.

Zur Ansteuerung der Mittel zur Wasserbefeuchtung der Belüftungsluft kann zweckmäßigerweise eine Steuerungseinrichtung vorgesehen sein, mit der die Mittel zur Erfassung des CO₂-Gehalts und die Mittel zur Erfassung der Wasserbeladung der Belüftungsluft signalverbunden sind. In Abhängigkeit von dem von den Mitteln zur Erfassung des CO₂-Gehalts ermittelten CO₂-Gehalt und von der von den Mitteln zur Erfassung der Wasserbeladung der Belüftungsluft ermittelten relativen Luftfeuchtigkeit, kann der Einschalt- und der Abschaltzeitpunkt der Sprüheinrichtung sowie die von der Sprüheinrichtung abzugebende Wassermenge eingestellt werden.

Nachfolgend wird die Erfindung anhand eines in der Zeichnung dargestellten Ausführungsbeispiels näher erläutert. In der Zeichnung zeigen:
- Fig. 1: in schematischer Darstellung eine CO₂-Absorptionseinrichtung in einer Belüftungseinrichtung zum Belüften des Inneren eines Unterseeboots und
- Fig. 2: in schematischer Darstellung einen Absorptionsbehälter der CO₂-Absorptionseinrichtung nach Fig. 1.

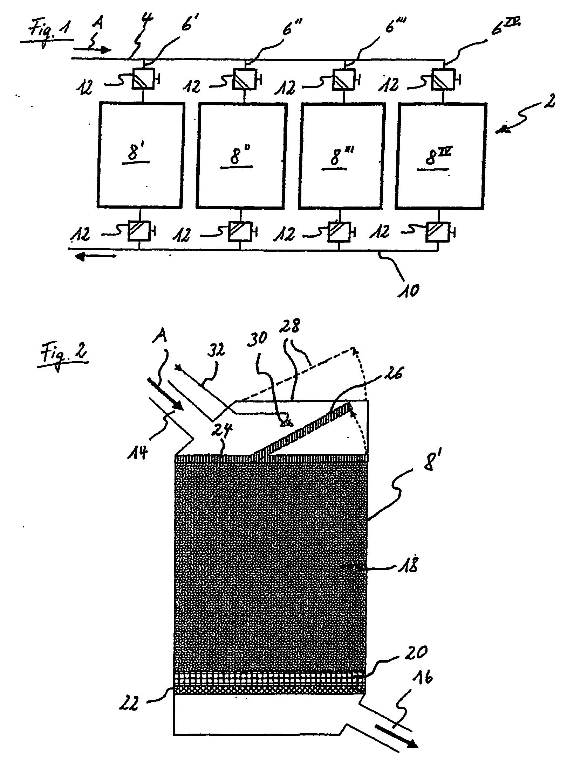

In Fig. 1 ist ein Leitungsabschnitt einer Belüftungseinrichtung eines Unterseeboots dargestellt, in dem eine CO₂-Absorptionseinrichtung 2 angeordnet ist. Dieser Leitungsabschnitt enthält eine Leitung 4, die in einer Durchflussrichtung A von Belüftungsluft, die zuvor in einem nicht dargestellten Bereich der Belüftungseinrichtung in dem Inneren des Unterseeboots angesaugt worden ist, durchflossen wird.

Eingangsseitig verzweigt sich die Leitung 4 in vier parallel zueinander ausgerichtete Leitungsstränge 6', 6", 6''' und 6^{IV}. In jedem dieser Leitungsstränge 6', 6", 6''' und 6^{IV} ist jeweils ein Absorptionsbehälter 8', 8'', 8''' und 8^{IV} der CO₂-Absorptionseinrichtung 2 angeordnet. Jeder der Absorptionsbehälter 8', 8", 8''' und 8^{IV} ist mit Calciumhydroxid als Mittel zum Binden des in der Belüftungsluft enthaltenden CO₂ gefüllt, worauf im weiteren Verlauf noch ausführlicher eingegangen wird.

Abströmseitig der Absorptionsbehälter 8', 8", 8''' und 8^{IV} münden die Leitungsstränge 6', 6", 6''' und 6^{IV} in einer Leitung 10, von der die von dem CO₂ befreite Belüftungsluft wieder in den Innenraum des Unterseeboots zurückgeleitet wird. Sowohl eingangs- wie auch ausgangsseitig der Absorptionsbehälter 8', 8", 8''' und 8^{IV} ist in den Leitungssträngen 6', 6", 6''' und 6^{IV} jeweils ein elektromagnetisch betätigtes Absperrventil 12 angeordnet. Mit den Absperrventilen 12 können die Absorptionsbehälter 8', 8", 8''' und 8^{IV} gasdicht gegenüber ihrer Umgebung und den Leitungen 4 und 10 abgeschlossen werden.

Fig. 2 zeigt schematisch den Aufbau des Absorptionsbehälter 8', der hinsichtlich seiner Bauart und Anordnung in der Belüftungseinrichtung mit den übrigen Absorptionsbehälter 8", 8''' und 8^{IV} der CO₂-Absorptionseinrichtung 2 übereinstimmt. Der Absorptionsbehälter 8' weist einen Einlassstutzen 14 auf, an der der von der Leitung 4 abzweigende Teil des Leitungsstrangs 6' angeschlossen ist. Des Weiteren weist der Absorptionsbehälter 8' einen Auslassstutzen 16 auf, an dem der in der Leitung 10 mündende Teil des Leitungsstrangs 6' angeschlossen ist.

In dem Absorptionsbehälter 8' ist in einem Bereich zwischen dem Einlassstutzen 14 und dem Auslassstutzen 16 ein Aufnahmeraum 18 ausgebildet, der zur Aufnahme des Absorptionsmittels, hier Calciumhydroxids dient. An seinem dem Auslassstutzen 16 zugewandten Ende wird der Aufnahmeraum 18 von einer Stützstruktur 20 begrenzt, die das in dem Aufnahmeraum 18 befindliche Calciumhydroxid trägt. Die Stützstruktur 20 ist gitterartig ausgebildet, so dass sie von der in den Absorptionsbehälter 8' eingeleiteten Belüftungsluft durchströmt werden kann. In Durchströmrichtung A abströmseitig der Stützstruktur 20 ist ein Filter 22 angeordnet. Dieser Filter 22 dient dazu, in dem Aufnahmeraum 18 befindliche Staubpartikel aufzufangen. Um den Filter 22 reinigen zu können, ist er in dem Absorptionsbehälter 8' entnehmbar angeordnet.

An seinem dem Einlassstutzen 14 zugewandten Ende wird der Aufnahmeraum 18 von einer Abdeckung 24 begrenzt, die derart ausgebildet ist, dass die über den Einlassstutzen 14 in den Absorptionsbehälter 8' eingeleitete Belüftungsluft über den gesamten Durchströmquerschnitt des Aufnahmeraums 18 verteilt wird. Ein Abschnitt 26 der Abdeckung 24 ist nach außen aufschwenkbar ausgebildet. Des Weiteren ist eine Wandung 28 des Absorptionsbehälters 8', die der von dem Aufnahmeraum 18 abgewandten Seite der Abdeckung 24 gegenüberliegend angeordnet ist, ebenfalls nach außen aufschwenkbar ausgebildet. Durch Aufschwenken der Wandung 28 und des Abschnitts 26 der Abdeckung 26 kann der Aufnahmeraum 18 mit Calciumhydroxid befüllt bzw. ausgetauscht werden.

Zwischen der Wandung 28 und der Abdeckung 24 ist in dem Absorptionsbehälter 8' eine Sprüheinrichtung in Form einer Düse 30 angeordnet. Die Sprührichtung der Düse 30 ist auf den Aufnahmeraum 18 und das darin befindliche Calciumhydroxid gerichtet. Über eine Leitung 32 wird die Düse 30 mit Wasser versorgt. Mit diesem Wasser kann das in dem Aufnahmeraum 18 befindliche Calciumhydroxid zunächst in einem an die Abdeckung 24 angrenzenden Bereich benetzt werden.

Die Funktionsweise der CO₂-Absorptionseinrichtung 2 des erfindungsgemäßen Unterseeboots ist wie folgt:

Vor einer Mission des Unterseeboots werden zunächst die Absorptionsbehälter 8', 8", 8''' und 8^{IV} mit Calciumhydroxid als Absorptionsmittel befüllt. Hierzu werden die Wandungen 28 der Absorptionsbehälter 8', 8'', 8''' und 8^{IV} sowie die schwenkbaren Abschnitte 26 der Abdeckungen 24 aufgeschwenkt und das Calciumhydroxid in loser Form entweder manuell in die Aufnahmeräume 18 geschüttet oder mit einer geeigneten Fördereinrichtung, z. B. einer Vakuumfördereinrichtung in diese gefördert.

Die Menge des in den Absorptionsbehälter 8', 8", 8''' und 8^{IV} verwendeten Calciumhydroxids ist fest vorgegeben. Um diese Menge Calciumhydroxid in den Aufnahmeräumen 18 der Absorptionsbehälter 8', 8", 8''' und 8^{IV} unterbringen zu können, muss die Packungsdichte in den Aufnahmeräumen 18 mittels Rütteleinrichtungen vergrößert werden. Hierdurch kann Staub entstehen, der durch die Stützstruktur 20 hindurchrieseln kann. Dieser Staub wird von den Filtern 22 aufgefangen. Nach dem Befüllen der Aufnahmeräume 18 mit dem Calciumhydroxid werden die Filter 22 aus den Absorptionsbehältern 8', 8", 8''' und 8^{IV} entnommen und gereinigt und anschließend wieder in den Absorptionsbehältern 8', 8'', 8''' und 8^{IV} angeordnet.

Die Absorptionsbehältern 8', 8", 8''' und 8^{IV} werden zunächst gasdicht verschlossen gehalten. Hierzu werden die den Absorptionsbehältern 8', 8", 8''' und 8^{IV} vor- und nachgeschalteten Absperrventile 12 von einer nicht dargestellten Steuerungseinrichtung, mit der die Absperrventile 12 signalverbunden sind, in eine Schließstellung gestellt. Bei Inbetriebnahme der CO₂-Absorptionseinrichtung 2 werden die dem Absorptionsbehälter 8' vor- und nachgeschalteten Absperrventile 12 von der Steuereinrichtung öffnend geschaltet, während bei den übrigen Absperrventilen 12 die Schließstellung beibehalten wird. Nun kann die in dem Inneren des Druckkörpers angesaugte Belüftungsluft durch den Absorptionsbehälter 8' geleitet werden. Hierbei wird das in der Belüftungsluft enthaltende CO₂ von dem in dem Aufnahmeraum 18 des Absorptionsbehälters 8' befindlichen Calciumhydroxid adsorbiert, wobei sich das Calciumhydroxid durch die Aufnahme des CO₂ in Calciumcarbonat umwandelt. Diese Umwandlung erfolgt zunächst nur in einem an die Abdeckung 24 angrenzenden Bereich, wobei sich dieser Bereich allmählich in Durchströmrichtung A zu der Stützstruktur 20 hin ausweitet.

Während des Einsatzes der CO₂-Absorptionseinrichtung 2 werden der CO₂-Gehalt sowie die relative Feuchtigkeit der Belüftungsluft von entsprechend ausgebildeten Sensormitteln erfasst. Diese in der Zeichnung nicht dargestellten Sensormittel sind eingangsseitig der Absorptionsbehältern 8', 8", 8''' und 8^{IV} angeordnet und mit der Steuereinrichtung signalverbunden. In Abhängigkeit von dem CO₂-Gehalt sowie sowie in Abhängigkeit von der relativen Luftfeuchtigkeit veranlasst die Steuereinrichtung, dass der Aufnahmeraum 18 des Absorptionsbehälters 8' von der Düse 30 mit Wasser besprüht wird. Hierbei wird lediglich das nicht mehr Absorptionsfähige Calciumcarbonat befeuchtet. Die Belüftungsluft kann nun diese Feuchtigkeit beim Durchströmen des Calciumcarbonats aufnehmen, wodurch die Absorption von CO₂ an dem Calciumhydroxid verbessert wird.

Während des Betriebs des Absorptionsbehälters 8' wird der CO₂-Gehalt der Belüftungsluft von einem ausgangsseitig dieses Absorptionsbehälters 8' angeordneten Gassensor überwacht. Dieser Gassensor ist in der Zeichnung der besseren Übersichtlichkeit wegen nicht dargestellt. Steigt der von dem Gassensor ermittelte CO₂-Gehalt an, ist dies ein Zeichen dafür, dass das Absorptionsvermögen des Absorptionsbehälters 8' erschöpft ist. Die mit dem Gassensor signalverbundene Steuereinrichtung schaltet nun das eingangsseitig des Absorptionsbehälters 8' angeordnete Absperrventil 12 schließend und schaltet gleichzeitig die dem Absorptionsbehälter 8" vor- und nachgeschalteten Absperrventile 12 öffnend, so dass nun der Absorptionsbehälter 8" von der Belüftungsluft durchströmt wird, wobei deren CO₂-Gehalt adsorbiert wird. Diese beschriebene Vorgehensweise wiederholt sich korrespondierend mit den Absorptionsbehältern 8''' und 8^{IV}.

### Bezugszeichenliste

- 2: CO₂-Absorptionseinrichtung
- 4: Leitung
- 6', 6'', 6''', 6^{IV}: Leitungsstrang
- 8', 8'', 8''', 8^{IV}: Absorptionsbehälter
- 10: Leitung
- 12: Absperrventil
- 14: Einlassstutzen
- 16: Auslassstutzen
- 18: Aufnahmeraum
- 20: Stützstruktur
- 22: Filter
- 24: Abdeckung
- 26: Abschnitt
- 28: Wandung
- 30: Düse
- 32: Leitung

- A: Durchströmrichtung

## Patentansprüche

1. Unterseeboot mit einer Belüftungseinrichtung zum Belüften des Inneren des Unterseeboots und mit einer CO₂-Absorptionseinrichtung (2), **dadurch gekennzeichnet, dass** die CO₂-Absorptionseinrichtung (2) zumindest zwei mit einem Absorptionsmittel gefüllte Absorptionsbehälter (8', 8", 8"', 8^{IV}) aufweist, welche in zwei zueinander parallelen Leitungssträngen (6', 6", 6"', 6^{IV}) der Belüftungseinrichtung angeordnet sind und nacheinander in eine von der Belüftungsluft durchströmbare Stellung schaltbar sind.

2. Unterseeboot nach Anspruch 1, **dadurch gekennzeichnet, dass** die Absorptionsbehälter (8', 8", 8"', 8^{IV}) eingangs- und ausgangsseitig mit Absperrmitteln (12) gasdicht verschließbar sind.

3. Unterseeboot nach Anspruch 2, **dadurch gekennzeichnet, dass** eine Steuerungeinrichtung zur öffnenden bzw. verschließenden Ansteuerung der Absperrmittel (12) vorgesehen ist.

4. Unterseeboot nach Anspruch 3, **dadurch gekennzeichnet, dass** ausgangsseitig der Absorptionsbehälter (8', 8", 8"', 8^{IV}) Mittel zur Erfassung des CO₂-Gehalts der Belüftungsluft angeordnet sind, welche mit der Steuerungseinrichtung signalverbunden sind.

5. Unterseeboot nach einem der vorangehenden Ansprüche, **dadurch gekennzeichnet, dass** die Absorptionsbehälter (8', 8", 8"', 8^{IV}) zur Aufnahme von Hydroxid in Form von Schüttgut ausgebildet sind.

6. Unterseeboot nach einem der vorangehenden Ansprüche, **dadurch gekennzeichnet, dass** in den Absorptionsbehältern (8', 8", 8"', 8^{IV}) ein Aufnahmeraum (18) für das Hydroxid ausgangsseitig von einem entnehmbaren Filter (22) begrenzt ist.

7. Unterseeboot nach einem der vorangehenden Ansprüche, **dadurch gekennzeichnet, dass** in den Absorptionsbehältern (8', 8", 8"', 8^{IV}) eingangsseitig Mittel (30) zur Wasserbefeuchtung der Belüftungsluft angeordnet sind.

8. Unterseeboot nach Anspruch 7, **dadurch gekennzeichnet, dass** eingangsseitig des Absorptionsbehälters (8', 8", 8"', 8^{IV}) eine Sprüheinrichtung (30) angeordnet ist, welche auf das Hydroxid sprühgerichtet ist.

9. Unterseeboot nach einem der vorangehenden Ansprüche, **dadurch gekennzeichnet, dass** eingangsseitig der Absorptionsbehälter (8', 8", 8"', 8^{IV}) Mittel zur Erfassung des CO₂-Gehalts der Belüftungsluft angeordnet sind.

10. Unterseeboot nach einem der vorangehenden Ansprüche, **dadurch gekennzeichnet, dass** eingangsseitig der Absorptionsbehälter (8', 8", 8"', 8^{IV}) Mittel zur Erfassung der Wasserbeladung der Belüftungsluft angeordnet sind.

11. Unterseeboot nach einem der Ansprüche 9 oder 10, **dadurch gekennzeichnet, dass** eine Steuerungseinrichtung zur Ansteuerung der Mittel zur Wasserbefeuchtung der Belüftungsluft vorgesehen ist, mit welcher die Mittel zur Erfassung des CO₂-Gehalts und die Mittel zur Erfassung der Wasserbeladung der Belüftungsluft signalverbunden sind.

## Claims

1. A submarine with a ventilation device for ventilating the inside of the submarine and with a CO₂-absorption device (2), **characterised in that** the CO₂-absorption device (2) comprises at least two absorption containers (8', 8", 8"', 8^{IV}) filled with an absorption agent, which are arranged in two parallel conduit lines (6', 6", 6"', 6^{IV}) of the ventilation device, and which may be switched one after the other into a position, in which ventilation air may flow through.

2. A submarine according to claim 1, **characterised in that** the absorption containers (8', 8", 8"', 8^{IV}) at the entry side and at the exit side, may be closed in a gas-tight manner with shut-off means (12).

3. A submarine according to claim 2, **characterised in that** a control device is provided for the opening and closing activation of the shut-off means (12).

4. A submarine according to claim 3, **characterised in that** means for detecting the CO₂-content of the ventilation air and which are signal connected to the control device, are arranged at the exit side of the absorption containers (8', 8", 8"', 8^{IV}).

5. A submarine according to one of the preceding claims, **characterised in that** the absorption containers (8', 8", 8"', 8^{IV}) are formed for the uptake of hydroxide in the form of bulk material.

6. A submarine according to one of the preceding claims, **characterised in that** in the absorption containers (8', 8", 8"', 8^{IV}), a receiver space (18) for the hydroxide is delimited on the exit side by a removable filter (22).

7. A submarine according to one of the preceding claims, **characterised in that** means (30) for water moisturisation of the ventilation air are arranged at the entry side, in the absorption containers (8', 8", 8"', 8^{IV}).

8. A submarine according to claim 7, **characterised in that** a spray device (30) which is spray-directed onto the hydroxide, is arranged at the entry side of the absorption container (8', 8", 8"', 8^{IV}).

9. A submarine according to one of the preceding claims, **characterised in that** means for detecting the CO₂-content of the ventilation air are arranged at the entry side of the absorption containers (8', 8", 8"', 8^{IV}).

10. A submarine according to one of the preceding claims, **characterised in that** means for detecting the water charging of the ventilation air are arranged at the entry side of the absorption containers (8', 8", 8"', 8^{IV}).

11. A submarine according to one of the claims 9 or 10, **characterised in that** a control device for activating the means for water humidification of the ventilation air is provided, to which the means for detecting the CO₂-content and the means for detecting the water charging of the ventilation air, are signal-connected.

## Revendications

1. Sous-marin équipé d'un dispositif de ventilation destiné à ventiler l'intérieur du sous-marin et d'un dispositif d'absorption du CO₂ (2), **caractérisé en ce que** le dispositif d'absorption du CO₂ (2) présente au moins deux réservoirs d'absorption (8', 8"; 8"', 8^{IV}) remplis d'un milieu absorbant et logés dans deux branches de conduites parallèles entre elles (6', 6"; 6"', 6^{IV}) du dispositif de ventilation, qui peuvent être branchés l'un après l'autre dans une position qui peut être parcourue par l'air de ventilation.

2. Sous-marin selon la revendication 1, **caractérisé en ce que** les réservoirs d'absorption (8', 8"; 8"', 8^{IV}) peuvent être obturés à joint étanche aux gaz, sur le côté d'entrée et sur le côté de sortie, à l'aide de moyens obturateurs (12).

3. Sous-marin selon la revendication 2, **caractérisé en ce qu'**il est prévu un dispositif de commande destiné à commander les moyens obturateurs (12) dans le sens de l'ouverture et de la fermeture.

4. Sous-marin selon la revendication 3, **caractérisé en ce que** sont disposés, sur le côté de sortie des réservoirs d'absorption (8', 8"; 8"', 8^{IV}), des moyens servant à capter la quantité de CO₂ de l'air de ventilation, et qui sont en communication avec le dispositif de commande par signaux.

5. Sous-marin selon l'une des revendications précédentes, **caractérisé en ce que** les réservoirs d'absorption (8', 8"; 8"', 8^{IV}) sont conçus pour recueillir l'hydroxyde sous forme de matière en vrac.

6. Sous-marin selon l'une des revendications précédentes, **caractérisé en ce que**, dans les réservoirs d'absorption (8', 8"; 8"', 8^{IV}), un compartiment de réception (18) pour l'hydroxyde est limité, sur le côté de sortie, par un filtre amovible (22).

7. Sous-marin selon l'une des revendications précédentes, **caractérisé en ce que**, dans les réservoirs d'absorption (8', 8"; 8"', 8^{IV}) sont disposés, sur le côté d'entrée, des moyens (30) servant à humidifier l'air de ventilation avec de l'eau.

8. Sous-marin selon la revendication 7, **caractérisé en ce que**, sur le côté d'entrée du réservoir d'absorption (8', 8"; 8"', 8^{IV}), est disposé un dispositif de pulvérisation (30) qui est orienté pour pulvériser sur l'hydroxyde.

9. Sous-marin selon l'une des revendications précédentes, **caractérisé en ce que**, sur le côté d'entrée des réservoirs d'absorption (8', 8"; 8"', 8^{IV}), sont disposés des moyens servant à capter la quantité de CO₂ dans l'air de ventilation.

10. Sous-marin selon l'une des revendications précédentes, **caractérisé en ce que**, sur le côté d'entrée des réservoirs d'absorption (8', 8"; 8"', 8^{IV}), sont disposés des moyens servant à recueillir la charge en eau de l'air de ventilation.

11. Sous-marin selon l'une des revendications 9 ou 10, **caractérisé en ce qu'**il est prévu un dispositif de commande pour commander les moyens servant à humidifier l'air de ventilation avec de l'eau, à l'aide duquel les moyens servant à capter la quantité de CO₂ et les moyens servant à recueillir la charge en eau de l'air de ventilation sont en communication par signaux.
